# EUROPEAN PATENT APPLICATION

(11) **EP 4 835 218 A1**
(43) Date of publication of application: **04.11.2026**
(21) Application number: 26172184.9
(22) Date of filing: 14.04.2026
(51) Int. Cl.: E04B 2/94, E04B 1/14, E04B 2/92, E04C 2/52, E04C 2/288, E04F 19/08, F16L 5/04, H02G 3/04, H02G 3/22, H02G 3/38, E04B 1/94, E04H 5/00, H05K 7/14

(54) **WALL PANEL SYSTEM WITH INSTALLABLE UNIT**

(71) Applicant: Sweet Project Holdings Limited, London, Greater London EC4M 7AU (GB)
(72) Inventor: EGLEN, Matthew, Greater London EC4M 7AU (GB)
(74) Representative: Reddie & Grose LLP

(57) **Abstract**

A prefabricated wall panel system for a building includes a prefabricated wall panel having a first side and a second side, wherein the prefabricated wall panel includes an aperture passing through the prefabricated wall panel between the first side and the second side. The prefabricated wall panel system further includes an installable unit having a shape complementary to the aperture and configured to be removably inserted into the aperture. The prefabricated wall panel system further includes a sealing means configured to be positioned between the installable unit and the prefabricated wall panel when the installable unit is inserted into the aperture to form a weatherproof seal between the prefabricated wall panel and the installable unit.

## Description

### FIELD OF INVENTION

The present disclosure relates to building construction, and more particularly to a prefabricated wall panel system to enable weatherproof service penetrations through external walls using removably installable units. The present disclosure also relates to a prefabricated wall panel, an installable unit, a building, a kit of parts, and a method of configuring a prefabricated wall panel system.

### BACKGROUND

In conventional building construction, building services (such as power cables, data cables, pipework for heating and cooling systems, ventilation ducts, and other utility connections) are often routed from external sources to the interior of a building by routing underground. However, such underground service routing is expensive to install, requiring excavation, trenching, and the provision of suitable ducting or conduits below ground level. Underground routing also depends on favourable ground conditions, which may not be present at all sites. Furthermore, underground services are difficult to access for maintenance, repair, or modification, as any work requires excavation to expose the service runs.

As an alternative, service penetrations through external walls of buildings may be used to enable the routing of mechanical, electrical, and other services between the interior and exterior of the building (often referred to as builder's work in connection (BWIC)). Such service penetrations offer advantages over underground routing in terms of accessibility for installation, maintenance, and future modification of services. However, in many building types, particularly those with high service demands such as data centres, industrial facilities, and commercial buildings, the number of service penetrations can be substantial. Furthermore, external walls of buildings are typically required to provide weatherproofing to prevent water ingress and air infiltration, as well as thermal insulation to maintain internal environmental conditions, and also fire resistance in certain applications to prevent the spread of fire from external sources. The inclusion of service penetrations through external walls must not compromise these properties.

Traditional approaches to creating service penetrations through external walls involve forming openings in the wall structure, e.g. by drilling or cutting through the wall in situ during construction of the building. Once services have been routed through these openings, the gaps around the services can be sealed using an appropriate sealant. This approach requires coordination between multiple trades on site, including structural work to form or cut the opening, installation of the services by mechanical and electrical contractors, and subsequent sealing and finishing work.

Prefabricated wall panel systems offer advantages over traditional construction methods by enabling wall panel to be manufactured off-site in controlled factory conditions. Prefabricated panels can be produced with consistent quality and dimensional accuracy, and can be transported to site in larger numbers for rapid installation. However, accommodating service penetrations within prefabricated wall panel systems presents challenges. If openings are cut into panels after installation, this can compromise the integrity of the panel and requires the additional on-site work as discussed above to form the service penetrations. If openings for services are formed in the panels during manufacture, the panels can only be used at locations within the building that require service penetrations, reducing the benefits of standardisation of prefabricated panels.

A further challenge arises when the service requirements of a building are not fully known at the time of construction, or when service requirements may change over the lifetime of the building. The ability to add service penetrations at locations where none were initially required, or to fill in service penetrations that are no longer required would be beneficial. Traditional approaches to accommodating such changes typically involve substantial on-site work, including cutting new openings, sealing redundant openings, and ensuring that the modified wall assembly meets the required performance standards, or completely replacing an entire wall panel.

The sealing of service penetrations to achieve weatherproof performance also presents particular difficulties. Conventional approaches often rely on the application of sealants, backing rods, and other materials on site to fill gaps between services and the surrounding wall structure, which are again labour intensive.

It has been appreciated that a wall panel system is needed that overcomes one or more of these problems.

### SUMMARY

The invention is defined in the independent claims to which reference should now be made. Advantageous features are set forth in the dependent claims.

In a first aspect, a prefabricated wall panel system for a building is provided. The prefabricated wall panel system comprises a prefabricated wall panel having a first side and a second side, wherein the prefabricated wall panel comprises an aperture passing through the prefabricated wall panel between the first side and the second side; an installable unit having a shape complementary to the aperture and configured to be removably inserted into the aperture; and a sealing means configured to be positioned between the installable unit and the prefabricated wall panel when the installable unit is inserted into the aperture to form a weatherproof seal between the prefabricated wall panel and the installable unit.

This arrangement addresses the challenges of accommodating service penetrations within prefabricated wall panel systems whilst maintaining weatherproof performance. By providing an aperture within the prefabricated wall panel that is configured to receive a removably installable unit, the system enables service penetrations to be added or removed (plugged) without the need for significant on-site work such as drilling or the like. The removable nature of the installable unit enables future modifications to service requirements by interchanging installable units, resulting in considerably less on-site work compared to conventional approaches. The sealing means ensures that a weatherproof seal can be rapidly formed between the installable unit and the prefabricated wall panel.

The sealing means may comprise a first sealing member coupled to the prefabricated wall panel and/or a second sealing member coupled to the installable unit. Coupling the sealing members to the prefabricated wall panel and/or the installable unit enables the sealing means to be pre-installed during manufacture, reducing on-site work and ensuring consistent seal quality.

The first sealing member may extend around an edge or an inner surface of the aperture. Extending the first sealing member around the edge or inner surface of the aperture ensures complete coverage of the interface between the aperture and the installable unit, providing a continuous weatherproof seal around the entire perimeter of the aperture.

The second sealing member may extend around an edge or an outer surface of the installable unit. Extending the second sealing member around the edge or outer surface of the installable unit ensures that the seal is formed consistently regardless of the specific position of the installable unit within the aperture.

The first sealing member may be a compressible gasket. The second sealing member may be a compressible gasket. A compressible gasket accommodates manufacturing tolerances and enables the seal to be formed through compression when the installable unit is inserted into the aperture, without requiring precise dimensional matching between the aperture and the installable unit.

The first sealing member may be made from a rubber or elastomer, preferably wherein the first sealing member is made from neoprene or ethylene propylene diene monomer, EPDM, rubber. The second sealing member may be made from a rubber or elastomer, preferably wherein the second sealing member is made from neoprene or ethylene propylene diene monomer, EPDM, rubber. Rubber and elastomer materials provide durable, flexible sealing performance that can accommodate thermal expansion and contraction of the wall panel and installable unit. Neoprene and EPDM rubber are particularly suitable for external building applications due to their resistance to weathering, ultraviolet radiation, and temperature extremes.

The sealing means may comprise both the first sealing member and the second sealing member, and the first sealing member may be configured to contact the second sealing member when the installable unit is inserted into the aperture to form the weatherproof seal. Configuring the first and second sealing members to contact each other provides a seal-to-seal interface that can provide a better sealing performance whilst also accommodating greater dimensional variations whilst maintaining weatherproof performance.

The weatherproof seal may be a watertight seal and/or an airtight seal. Providing both watertight and airtight sealing ensures that the wall panel system meets building performance requirements for weather resistance and thermal efficiency.

A cross-section of the aperture may remain constant when moving in a direction between the first surface and the second surface. A constant cross-section enables the installable unit to be inserted and removed from both surfaces of the wall panel, and simplifies manufacture of the aperture within the wall panel.

The aperture may have a rectangular cross-section. A rectangular cross-section accommodates the routing of multiple services in a compact arrangement.

A longer side of the rectangular cross-section may extend parallel to a base of the prefabricated wall panel. Orienting the longer side of the aperture parallel to the base of the panel provides a horizontal letterbox configuration that accommodates services routed at a consistent height, reducing the need for vertical service runs within the building.

The prefabricated wall panel may have a base and a top edge, and the aperture may be located closer to the top edge than the base, at a midpoint between the top edge and the base, or closer to the base than the top edge. Providing flexibility in the vertical position of the aperture enables the wall panel system to accommodate different service routing requirements and building configurations. Positioning the aperture closer to the top edge of the panel is advantageous for bringing in services at ceiling height within the building, reducing the need for vertical service runs within the building.

The aperture may be pre-formed during fabrication of the prefabricated wall panel. Pre-forming the aperture during fabrication ensures dimensional accuracy and eliminates the need for on-site drilling or cutting, which could compromise the structural integrity of the wall panel whilst requiring additional on-site work..

The prefabricated wall panel may further comprise a lining sleeve covering an inner surface of the aperture. A lining sleeve protects the inner surface of the aperture from damage during installation and removal of the installable unit, and provides a consistent surface for engagement with the sealing means to improve the weatherproof sealing performance.

The first sealing member may be coupled to the lining sleeve. Coupling the first sealing member to the lining sleeve enables the sealing means to be pre-assembled with the lining sleeve, simplifying installation and ensuring correct positioning of the seal.

The sleeve may be formed from a non-combustible material, preferably wherein the sleeve is formed from a metal material. A non-combustible sleeve material contributes to the fire resistance of the wall panel system, and a metal sleeve provides durability and resistance to damage during installation and removal of the installable unit.

The aperture may be a first aperture, and the prefabricated wall panel may further comprise a second aperture passing through the prefabricated wall panel between the first side and the second side. Providing multiple apertures within a single prefabricated wall panel enables multiple service penetrations to be accommodated within a standardised panel configuration, reducing the number of different panel types required.

The first aperture and the second aperture may be positioned symmetrically around a centre line of the first and second sides. Symmetrical positioning of the apertures helps ensure panel strength is even across the prefabricated wall panel, as well as enable uniform organisation of services passing through the wall.

The first aperture and the second aperture may have identical cross-sections. Identical cross-sections enable the same installable units to be used in either aperture, reducing the number of different component types required.

The prefabricated wall panel system may further comprise a second installable unit having a shape complementary to the second aperture and configured to be removably inserted into the second aperture, and a second sealing means configured to be positioned between the second installable unit and the prefabricated wall panel when the second installable unit is inserted into the second aperture to form a weatherproof seal between the prefabricated wall panel and the second installable unit. Providing a second installable unit and second sealing means enables both apertures to be utilised independently, with each aperture capable of accommodating different service configurations or being plugged when not required.

The prefabricated wall panel may comprise a plurality of layers including a first facing panel forming the first side, a second facing panel forming the second side, and preferably including a first insulation layer disposed between the first facing panel and the second facing panel. A multi-layer construction provides thermal insulation and structural performance within a single prefabricated panel, reducing on-site assembly requirements.

The installable unit may be a first type of installable unit configured to plug the aperture when inserted within the aperture. A plugging type of installable unit enables apertures to be sealed when service penetrations are not required, maintaining the weatherproof and thermal performance of the wall panel. Further, such a plugging type of installable unit can be easily removed when a service penetration is subsequently required within that wall panel, enabling the aperture to be converted from a plugged configuration to a service-passing configuration with minimal on-site work.

The installable unit may comprise an outer sleeve extending between a first end and a second end of the installable unit and defining an outer surface of the installable unit, and a solid portion contained within the outer sleeve. The outer sleeve protects the outer surface of the installable unit from damage during installation and removal, and provides a consistent surface for engagement with the sealing means to improve the weatherproof sealing performance. Further, the solid portion plugs the aperture to maintain the weatherproof and thermal performance of the wall panel.

The solid portion may comprise a plurality of layers including a third facing panel, a fourth facing panel, and preferably including a second insulation layer disposed between the third facing panel and the fourth facing panel. A multi-layer solid portion provides thermal and structural performance matching that of the surrounding wall panel, ensuring consistent performance across the wall panel system when the apertures are plugged with the first type of installable unit.

The solid portion may have a fire rating equal to or greater than a fire rating of the prefabricated wall panel. Matching or exceeding the fire rating of the wall panel ensures that the plugging unit does not create a weak point in the fire resistance of the wall panel system.

The installable unit may comprise one or more attachment points coupled to the first end and/or the second end of the installable unit. Attachment points enable the installable unit to be gripped for insertion and removal, and may enable connection of handling equipment for insertion and removal of the installable unit.

The installable unit may be a second type of installable unit configured to enable one or more services to pass from the first side of the prefabricated wall panel to the second side of the prefabricated wall panel when inserted within the aperture. A service-passing type of installable unit enables services to be routed through the wall panel whilst maintaining weatherproof performance. A plugging type of installable unit can be replaced with the service-passing type of installable unit to enable service penetrations to be added at that location at any point during or after construction of the building.

The one or more services may include one or more pipes, one or more ducts, one or more wires, one or more cables, one or more conduits, one or more cable trays, or any combination thereof. In general, the services may be any type of building services or Mechanical, Electrical, Plumbing & Heating (MEPH) services. Accommodating a range of service types enables the wall panel system to be used for diverse building applications with varying service requirements.

The installable unit may comprise an outer sleeve extending between a first end and a second end of the installable unit and defining an outer surface of the installable unit, and a cavity contained within the outer sleeve, said cavity configured to receive a filling material and the one or more services extending through the filling material. The outer sleeve protects the outer surface of the installable unit from damage during installation and removal, and provides a consistent surface for engagement with the sealing means to improve the weatherproof sealing performance. Further, the cavity enables services to be routed through the installable unit whilst the filling material provides sealing and support around the services.

The filling material may be configured to surround the one or more services within the cavity. Surrounding the services with filling material provides support and sealing around each service, preventing movement and maintaining weatherproof performance.

The filling material may include one or more of a putty material, a cellular rubber, silicone, mortar, and/or an insulating material. These filling materials provide flexibility in accommodating different service configurations and performance requirements, with options for fire resistance, thermal insulation, and ease of installation.

In use, the filling material and the one or more services may fill the entire cavity within the outer sleeve. Filling the entire cavity ensures that no voids remain that could compromise weatherproof or fire resistance performance.

The filling material may be configured to form a weatherproof seal within the cavity. A weatherproof seal within the cavity prevents water and air infiltration in combination with the seal between the installable unit and the aperture.

The filling material may have a fire rating equal to or greater than a fire rating of the prefabricated wall panel. Matching or exceeding the fire rating ensures that the service penetration does not create a weak point in the fire resistance of the wall panel system.

The installable unit may comprise one or more attachment points coupled to the first end and/or the second end of the installable unit. Attachment points enable the installable unit to be gripped for insertion and removal, and may enable connection of handling equipment for insertion and removal of the installable unit.

The second sealing member may be coupled to the outer sleeve. Coupling the second sealing member to the outer sleeve enables the sealing means to be pre-assembled with the installable unit, ensuring correct positioning and simplifying installation.

The outer sleeve may be formed from a non-combustible material, preferably wherein the sleeve is formed from a metal material. A non-combustible sleeve material contributes to the fire resistance of the service penetration, and a metal sleeve provides durability and resistance to damage.

The installable unit may have a rectangular cross-section. A rectangular cross-section matches the rectangular aperture, enabling efficient use of the available opening for service routing.

The installable unit may be configured to be held within the aperture via a friction fit. A friction fit enables the installable unit to be secured within the aperture without additional fasteners, simplifying installation and enabling removal without damage to the wall panel.

The installable unit may have a fire rating equal to or greater than a fire rating of the prefabricated wall panel. Matching or exceeding the fire rating ensures that the installable unit does not compromise the fire resistance of the wall panel system.

The first side of the prefabricated wall panel may be configured to form part of an external wall of the building when installed in the building, and the second side of the prefabricated wall panel may be configured to form part of an internal wall of the building when installed in the building. This configuration enables the wall panel system to be used for external walls where weatherproof performance is required.

The installable unit may be configured to be removably inserted into the aperture from a direction of the first side of the prefabricated wall panel. Insertion from the external side enables installation and removal to be performed from outside the building, which may be more accessible than the internal side in certain building configurations.

The installable unit may be configured to be flush with the prefabricated wall panel when the installable unit is inserted into the aperture. A flush configuration provides a neat appearance and prevents water from pooling on protruding surfaces.

In a second aspect, a prefabricated wall panel for a prefabricated wall panel system is provided. The prefabricated wall panel has a first side and a second side, and the prefabricated wall panel comprises an aperture passing through the prefabricated wall panel between the first side and the second side, said aperture configured to receive an installable unit having a shape complementary to the aperture and being configured to be removably inserted into the aperture; and a sealing means configured to be positioned between the prefabricated wall panel and the installable unit when the installable unit is inserted into the aperture to form a weatherproof seal between the prefabricated wall panel and the installable unit.

In a third aspect, an installable unit for a prefabricated wall panel system for a building is provided. The prefabricated wall panel system includes a prefabricated wall panel having a first side and a second side, and an aperture passing through the prefabricated wall panel between the first side and the second side. The installable unit has a shape complementary to the aperture and is configured to be removably inserted into the aperture; and the installable unit comprises a sealing means configured to be positioned between the installable unit and the prefabricated wall panel when the installable unit is inserted into the aperture to form a weatherproof seal between the prefabricated wall panel and the installable unit.

In a fourth aspect, a building having at least one wall comprising the prefabricated wall panel system is provided. This building benefits from the advantages of the prefabricated wall panel system, including rapid construction, and the ability to accommodate and modify the locations of service penetrations whilst maintaining weatherproof performance.

The building may be a data centre. Data centres have substantial service penetration requirements for power, data, and cooling services, making the prefabricated wall panel system particularly beneficial for this building type.

In a fifth aspect, a kit of parts for a prefabricated wall panel system for a building is provided. The kit of parts comprises a prefabricated wall panel having a first side and a second side, wherein the prefabricated wall panel comprises an aperture passing through the prefabricated wall panel between the first side and the second side; an installable unit having a shape complementary to the aperture and configured to be removably inserted into the aperture; and a sealing means configured to be positioned between the installable unit and the prefabricated wall panel when the installable unit is inserted into the aperture to form a weatherproof seal between the prefabricated wall panel and the installable unit.

This kit of parts enables the prefabricated wall panel system to be supplied as a coordinated set of components which can be assembled at the building site.

In a sixth aspect, a method of configuring a prefabricated wall panel system is provided. The method comprises providing a prefabricated wall panel having a first side and a second side, wherein the prefabricated wall panel comprises an aperture passing through the prefabricated wall panel between the first side and the second side; and inserting, into the aperture, an installable unit having a shape complementary to the aperture, wherein a sealing means is positioned between the installable unit and the prefabricated wall panel when the installable unit is inserted into the aperture to form a weatherproof seal between the prefabricated wall panel and the installable unit.

This method enables the prefabricated wall panel system to be configured with service penetrations either formed or plugged as required, with less on-site work than conventional approaches. The sealing means automatically forms a weatherproof seal upon insertion of the installable unit, reducing on-site work and ensuring consistent seal quality.

Inserting the installable unit into the aperture may comprise applying a pulling or pushing force to the installable unit to form a friction fit between the aperture and the installable unit. A friction fit enables the installable unit to be secured without additional fasteners, simplifying installation and enabling future removal.

The method may further comprise, prior to inserting the installable unit, coupling a first sealing member to the prefabricated wall panel and/or coupling a second sealing member to the installable unit.

The sealing members may be coupled to the installable unit during manufacture ensuring consistent positioning and reducing on-site work. Alternatively, the sealing members can be coupled to the installable unit on-site just prior to installation within the aperture.

The installable unit may be an installable unit of a second type that is configured to enable one or more services to pass from the first side of the prefabricated wall panel to the second side of the prefabricated wall panel when inserted within the aperture, and the method may further comprise, prior to inserting the installable unit of the second type, removing from the aperture an installable unit of a first type that is configured to plug the aperture when inserted within the aperture. This enables apertures to be initially plugged and subsequently converted to service penetrations when required, providing flexibility to accommodate changing service requirements.

The installable unit may be an installable unit of a second type that is configured to enable one or more services to pass from the first side of the prefabricated wall panel to the second side of the prefabricated wall panel when inserted within the aperture, and the method may further comprise inserting one or more services through a cavity contained within an outer sleeve of the installable unit, and disposing a filling material within the cavity around the one or more services within the cavity. This enables services to be routed through the installable unit with the filling material providing sealing and support around the services.

### BRIEF DESCRIPTION OF FIGURES

Embodiments of the invention will be described, by way of example, with reference to the following drawings, in which:
FIG. 1 illustrates an isometric view of a modular data centre.
FIG. 2 illustrates an isometric view of a prefabricated wall panel system.
FIG. 3 illustrates an exploded isometric view of the prefabricated wall panel system of FIG. 2, with an alternative combination of installable units.
FIG. 4 illustrates an isometric view of the prefabricated wall panel system of FIG. 3.
FIG. 5 illustrates a flowchart of a method for configuring a prefabricated wall panel system.

Common reference numerals are used throughout the figures to indicate similar features.

### DETAILED DESCRIPTION

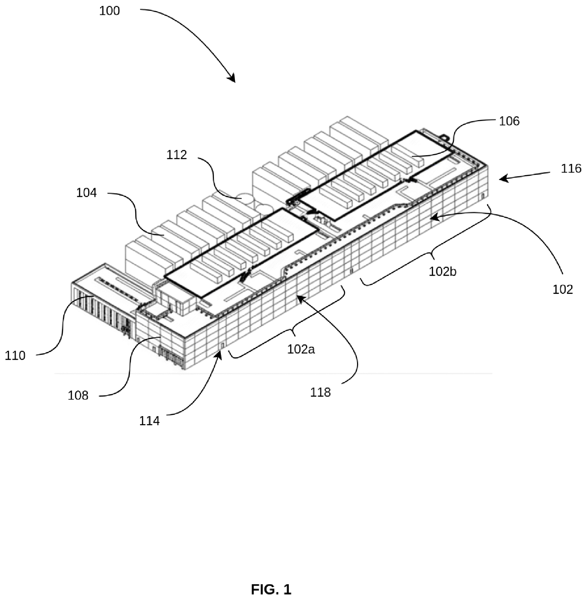

The prefabricated wall panel systems described herein can be used to provide readily configurable service penetrations in buildings (such as in data centres), whilst maintaining weatherproofing. FIG. 1 illustrates an isometric view of an exemplary modular data centre 100 that can include one or more of the prefabricated wall panel systems described herein.

The modular data centre 100 comprises a data hall 102 configured to house a plurality of computer systems. The data hall 102 is divided into a first sub-hall 102a and a second sub-hall 102b. The first sub-hall 102a and the second sub-hall 102b may be configured to operate independently, enabling the data hall 102 to serve two different operating clients independently when the data hall 102 is split down the middle.

A plurality of power supply modules 104 are arranged linearly adjacent to the data hall 102. Each power supply module 104 is structurally separate from the data hall 102, with a gap between each power supply module 104 and the data hall 102. The power supply modules 104 are configured to provide electrical power to the data hall 102, and electrical cables from the power supply modules are an example of a service which can enter a building via the service penetrations provided by the prefabricated wall panel systems described herein.

A plurality of modular cooling units 106 are positioned on the roof of the data hall 102. The modular cooling units 106 are arranged in rows along the length of the data hall 102 and are configured to provide cooling to the data hall 102.

Sprinkler water tanks 112 are located near the power supply modules 104. Water tanks 112 are configured to supply water for sprinkler operations of the modular data centre 100. Such water tanks may be located anywhere within the data centre in general.

A logistics building 108 is attached at one end of the data hall 102. The logistics building 108 shares the same width as the data hall 102. The logistics building 108 may house goods lifts, stores, delivery entrances, and other functional sections required for operation of modular data centre 100. An administrative building 110 is positioned adjacent to the logistics building 108. The administrative building 110 is configured to house personnel and administrative functions associated with the modular data centre 100. For example, the administrative building 110 may take the form of an office building.

The data hall 102 includes a first end portion 114 at one end, a second end portion 116 at the opposite end, and one or more middle portions 118 arranged in a repeating linear fashion between the first end portion 114 and the second end portion 116. Each of the first end portion 114, the second end portion 116, and the middle portions 118 has a respective power supply module 104 associated with the respective portion. The respective power supply module 104 is configured to provide a power required by the associated portion when the modular data centre 100 is in operation. As illustrated, each of the first end portion 114, the second end portion 116, and the middle portions 118 has two power supply modules 104 associated with it, though in some cases more or fewer power supply modules 104 may be associated with each portion. In some cases, each portion may be able to have a different number of power supply modules 104 associated with it.

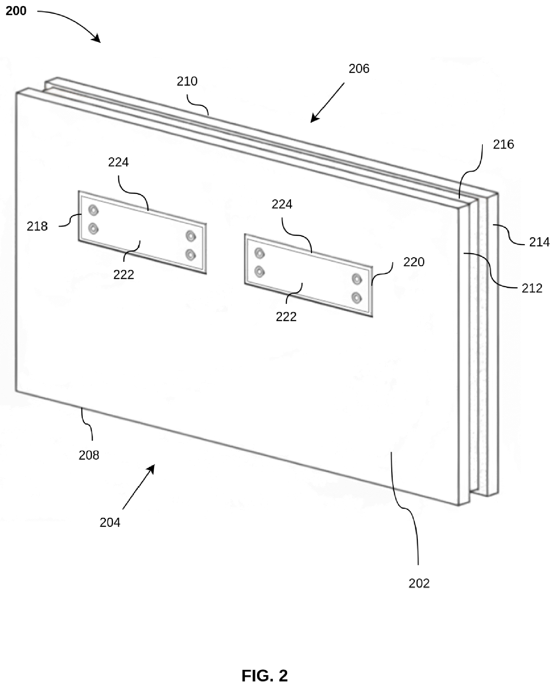

In general, the external wall of buildings, such as the data hall 102 of FIG. 1, may be constructed from a number of conventional prefabricated wall panels. Wall panel systems of the present disclosure may be used in place of some or all of these conventional wall panels to enable readily configurable service penetrations through the external wall of the building, whilst also maintaining the properties of the external wall, such as weatherproofing, thermal insulation, and structural support. One embodiment of such a wall panel system will now be described with reference to FIGs. 2 to 4.

FIG. 2 illustrates an isometric view of a prefabricated wall panel system 200. The prefabricated wall panel system 200 enables service penetrations to be formed through external walls of the building using removably installable units. The prefabricated wall panel system 200 allows service penetrations to be added, removed, or reconfigured without the need for drilling or cutting through the wall panel on site, and without compromising the weatherproof performance of the wall.

The prefabricated wall panel system 200 comprises a prefabricated wall panel 202 having a first side 204 and a second side 206. The prefabricated wall panel 202 has a base 208 and a top edge 210, such that the base 208 is positioned on the ground or closer to the ground than the top edge 210 when the prefabricated wall panel 202 is installed in the building. The first side 204 of the prefabricated wall panel 202 forms part of the external facing side of the external wall of the building, and the second side 206 of the prefabricated wall panel 202 forms part of the internal facing side of the external wall of the building, when the prefabricated wall panel system 200 is installed in a building.

In the embodiment of FIG. 2, the prefabricated wall panel 202 comprises a plurality of layers including a first facing panel 212 forming the first side 204, a second facing panel 214 forming the second side 206, and a first insulation layer 216 disposed between the first facing panel 212 and the second facing panel 214. In other words, the prefabricated wall panel 202 is a precast concrete sandwich panel assembly comprising an external facing panel of concrete (the first facing panel 212), an internal facing panel of concrete (the second facing panel 214), and the first insulation layer 216 disposed between the external facing panel and the internal facing panel. The first insulation layer 216 may be formed from a fire-rated insulation material, such as mineral wool or stone wool insulation, or from an A1 classified non-combustible foam insulation material (e.g. A1 classification according to the EN 13501-1 standard). In some embodiments, the first facing panel 212 may have a thickness of between 70mm and 100mm, the first insulation layer 216 may have a thickness of between of between 100mm and 250mm, and the second facing panel 214 may have a thickness of between 100mm and 300mm, preferably 200mm. In general, various other configurations of layers and materials may be used in the prefabricated wall panel 202, as would be understood by the skilled person.

The prefabricated wall panel 202 includes at least one aperture or penetration passing through the prefabricated wall panel 202 between the first side 204 and the second side 206. In the embodiment of FIG. 2, the prefabricated wall panel 202 includes a first aperture 218 and a second aperture 220. The first aperture 218 and the second aperture 220 are pre-formed during fabrication of the prefabricated wall panel 202, rather than being cut or drilled at the building site.

In the embodiment of FIG. 2, the first aperture 218 and the second aperture 220 each have a rectangular cross-section. A longer side of the rectangular cross-section extends parallel to the base 208 of the prefabricated wall panel 202. Further, the first aperture 218 and the second aperture 220 are positioned symmetrically around a centre line of the first side 204 and the second side 206. This rectangular configuration with the longer side horizontal provides a letterbox-shaped opening that accommodates the routing of multiple services in a compact horizontal arrangement, reducing the need for vertical service runs within the building. The symmetrical positioning of the apertures around the centre line of the prefabricated wall panel 202 helps ensure that panel strength is distributed evenly across the prefabricated wall panel 202, and enables uniform organisation of services passing through the wall.

In other embodiments, the apertures may have other cross-sectional shapes, such as square or circular, and may be positioned at other locations within the prefabricated wall panel 202, depending on the service routing requirements of the building.

For example, the location of apertures within the prefabricated wall panel 202 may be chosen based on the specific service distribution requirements of the building. In the embodiment of FIG. 2, the first aperture 218 and the second aperture 220 are located closer to the top edge 210 than the base 208. This positioning is advantageous for bringing in services at ceiling height within the building, which can reduce the need for vertical service runs within the building. In other embodiments, the apertures may be located at a midpoint between the top edge 210 and the base 208, or closer to the base 208 than the top edge 210, depending on the specific service routing requirements of the building. Positioning the apertures closer to the base 208 may be advantageous for services that are routed at floor level or below raised access floors, whilst positioning at the midpoint may be suitable for services that are distributed at an intermediate height within the building.

In general, the apertures may be formed with a standardised cross-sectional size and shape. In other words, in embodiments where multiple apertures are included within a single prefabricated wall panel 202, each aperture may have an identical cross-section. Further, the cross-section of apertures may standardized across different prefabricated wall panel systems used within a building. This standardisation enables any installable unit to be interchanged between any aperture within the same prefabricated wall panel 202 or between apertures in different prefabricated wall panels, reducing the number of different component types required and simplifying inventory management and installation.

In the embodiment of FIG. 2, the first aperture 218 and the second aperture 220 have identical standardized cross-sections. In a specific embodiment, each aperture may have a standardised size of approximately 2 metres by 0.5 meters. Such dimensions can accommodate typical service distribution requirements for a data centres while maintaining the structural integrity of the prefabricated wall panel 202. Alternative standardised dimensions for the apertures may be used in other embodiments, depending on the specific application.

The prefabricated wall panel system 200 further includes one or more installable units configured to inserted into an aperture to seat within that aperture. Each installable unit has a shape complementary to (i.e. with the same cross-section as) the aperture into which it is to be inserted, enabling the installable unit to be removably inserted into and removed from the aperture. For example, the cross-section of each installable unit may be the same as the standardised cross-section of the apertures, such that each installable unit may be inserted into any of the apertures on any prefabricated wall panel system 200 included within the building.

The installable units may be of different types depending on the intended function. In particular, the installable units may include a first type of installable unit configured to plug the aperture when inserted within the aperture, and a second type of installable unit configured to enable one or more services to pass from the first side 204 of the prefabricated wall panel 202 to the second side 206 of the prefabricated wall panel 202 when inserted within the aperture. The first type of installable unit will also be referred to herein as a plug-type installable unit or closingtype installable unit, and the second type of installable unit will also be referred to herein as a service-type installable unit or BWIC-type installable unit. The interchangeability of these two types of installable units enables the prefabricated wall panel system 200 to be readily reconfigured to accommodate changing service requirements, with a plug-type installable unit being replaced by a service-type installable unit when a service penetration is subsequently required, or vice versa when a service penetration is no longer needed.

For example, in FIG. 2 two plug-type installable units 222 are shown, each inserted into one of the first aperture 218 and the second aperture 220. In this configuration, the prefabricated wall panel system 200 is shown with no service penetrations, as both apertures are plugged by the plug-type installable units 222. This fully plugged configuration may represent the default state in which prefabricated wall panel systems 200 are shipped to the building site. By shipping the panels with all apertures plugged, the prefabricated wall panel 202 can be installed in the building without requiring immediate decisions about service penetration locations. The plug-type installable units 222 ensure that the prefabricated wall panel system 200 remains weatherproof when used to form a portion of the external wall of the building.

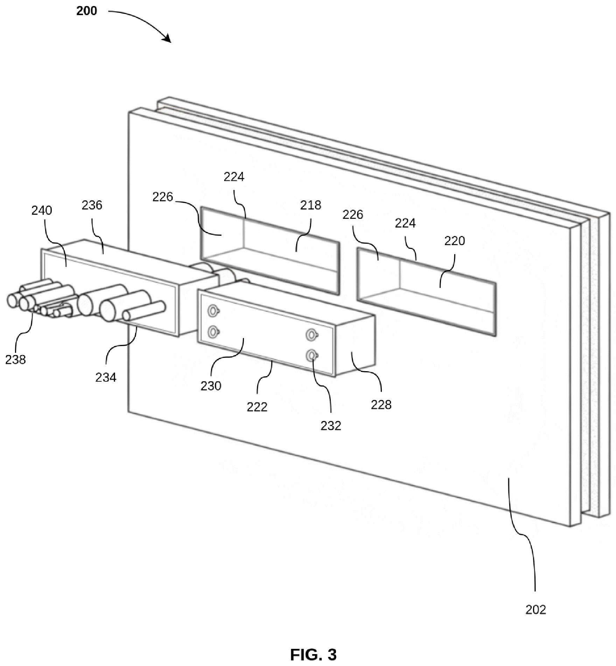

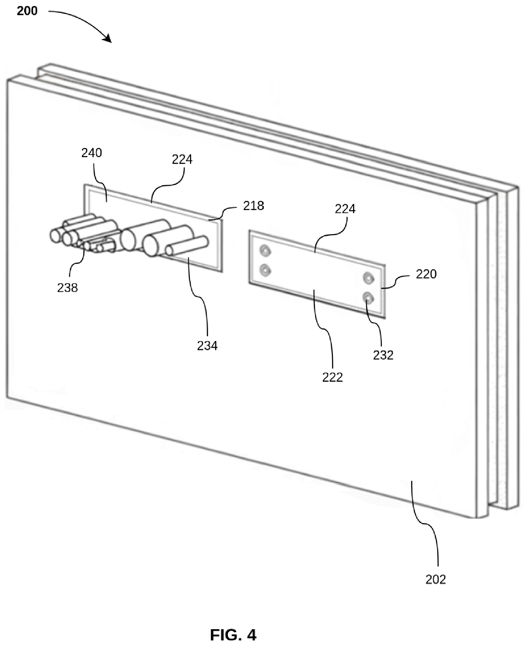

When a service penetration is subsequently required at one of the aperture locations, the corresponding plug-type installable unit 222 can be removed from that aperture and replaced with a service-type installable unit, as will be described below in more detail with reference to FIGs. 3 and 4. FIG. 3 illustrates an exploded isometric view of the prefabricated wall panel system 200, showing the prefabricated wall panel 202 with the plug-type installable units 222 removed from the first and second apertures 218,220, and with one of the plug-type installable units 222 replaced by a service-type installable unit 234. FIG. 4 illustrates an isometric view of the prefabricated wall panel system 200 of FIG. 3, but with the installable units inserted into the apertures 218,220 of the prefabricated wall panel 202. The two types of installable units (plug-type and service-type) will be referred to as installable units in general herein, where the description applies equally to both types of installable units.

As seen in each of FIGs. 2 to 4, the prefabricated wall panel system 200 further comprises a sealing means 224 configured to be positioned between the prefabricated wall panel 202 and an installable unit (of either type) when that installable unit is inserted into the aperture. In this way, the sealing means 224 forms a weatherproof seal between the prefabricated wall panel 202 and the installable unit inserted within the aperture. Such a weatherproof seal is a seal that is watertight (e.g. to rain or snow) and is preferably also an airtight seal (to prevent wind and drafts entering the building, as well as heat escaping from the building) or a dust-tight seal.

Various different sealing configurations may be used as the sealing means 224 between each aperture and installable unit. In the embodiment of FIGs. 2 to 4, the sealing means 224 comprises a sealing member coupled to the prefabricated wall panel 202 and extending around the edge of each of the first aperture 218 and the second aperture 220. In particular, the sealing member extends along the perimeter of the aperture where the aperture meets the first side 204 of the prefabricated wall panel 202. When inserted into the apertures, the installable units abut the sealing member to form the weatherproof seal.

In more detail, the sealing member may be positioned on the inner surface of each aperture at the edge where the aperture meets the first side 204, and the outer surface of the installable unit then abuts the sealing member when the installable unit is inserted into the aperture to form the weatherproof seal. Alternatively, the sealing member may be positioned on the surface of the first side 204 around the edge the of each aperture, and the installable units may include a flange or lip extending around the perimeter of the installable unit in a complementary fashion to the sealing member around perimeter of the aperture. The sealing member will then be sandwiched between the flange or lip and the first side 204 to form the weatherproof seal when the installable unit is inserted in the aperture from the direction of the first side 204.

Various other configurations may be used for the sealing means 224. In some embodiments, the sealing means 224 may alternatively extend along the perimeter of the aperture where the aperture meets the second side 206 of the prefabricated wall panel 202. In further embodiments, the sealing means 224 may be positioned on the inner surface of the aperture between the first side 204 and the second side 206, such that the sealing means 224 contacts the outer surface of the installable unit when the installable unit is inserted. The sealing means 224 may alternatively be positioned at the edge of the aperture on both the first side 204 and the second side 206 of the prefabricated wall panel 202 to provide sealing at both ends of the aperture.

In yet further embodiments, the sealing means 224 may comprise a sealing member coupled to the installable units rather than the prefabricated wall panel 202. For example, the sealing member may extend around an outer edge or an outer surface of the installable unit, such that when the installable unit is inserted into the aperture, the sealing member contacts the inner surface of the aperture or the edge of the aperture to form the weatherproof seal.

The sealing means 224 may be coupled to the prefabricated wall panel 202 during fabrication of the prefabricated wall panel 202, such that the sealing means 224 is pre-installed around each aperture before the prefabricated wall panel 202 is shipped to the building site. Alternatively, the sealing means 224 may be coupled to the installable unit during fabrication of the installable unit, such that the sealing means 224 is pre-installed on each installable unit before the installable unit is shipped to the building site. Pre-installing the sealing means 224 during fabrication reduces on-site work and ensures consistent positioning of the seal.

In further embodiments, the sealing means 224 may be a separate component that is not coupled to either of the prefabricated wall panel 202 or installable units. This separate sealing means 224 can be positioned between the aperture and the installable unit during insertion of the installable unit into the aperture to form the weatherproof seal. In such embodiments, the sealing means 224 may be applied to the aperture or to the installable unit on site immediately prior to insertion of the installable unit. Providing the sealing means 224 as a separate component enables flexibility in accommodating different sealing requirements or replacing worn sealing members during the lifetime of the building.

In some embodiments, the sealing means 224 may comprise both a first sealing member coupled to the prefabricated wall panel 202 and a second sealing member coupled to the installable unit. When the installable unit is inserted into the aperture, the first sealing member is configured to contact the second sealing member to form the weatherproof seal. This seal-to-seal interface provides enhanced sealing performance compared to a single sealing member configuration, as the contact between the two sealing members can accommodate greater dimensional variations between the aperture and the installable unit whilst maintaining weatherproof performance. The dual sealing member configuration also provides redundancy, such that if one sealing member is damaged or degraded, the other sealing member may still provide a degree of sealing performance.

In general, for any of the sealing means 224 configurations described above, the sealing member or first and second sealing members may each be a compressible gasket or crush gasket. Such a compressible gasket enables the sealing members to deform under pressure when the installable unit is inserted into the aperture, thereby conforming to any minor surface irregularities and creating a continuous weatherproof seal around the entirety of the aperture-installable unit interface.

Further, the sealing member or members may be formed from a rubber or elastomer in some embodiments. In a preferred embodiment, the first sealing member is made from neoprene or ethylene propylene diene monomer (EPDM) rubber. Such materials provide suitable elasticity and durability for repeated compression cycles, and exhibit resistance to weathering, ultraviolet radiation, and temperature variations encountered in external wall applications.

In some embodiments, the sealing members may be configured for repeated use, enabling the installable unit to be removed and reinserted multiple times without requiring replacement of the sealing members. Such reusable sealing members may be formed from resilient materials (such as those listed above) that recover their original shape after compression, maintaining effective sealing performance through multiple installation and removal cycles. Alternatively, in other embodiments, the sealing members may be configured as single-use, sacrificial seals that are replaced each time the installable unit is removed from the aperture. Single-use sacrificial seals may provide enhanced sealing performance for a single installation, as the seal material can be optimised for initial compression without needing to retain elasticity for subsequent cycles.

When the installable units are inserted into the apertures 218,220, such as as shown in FIGs. 2 and 4, the installable units are may be configured to be held within the aperture via a friction fit. In other words, the installable units are sized such that when inserted into the aperture, the outer dimensions of the installable unit engage with the inner dimensions of the aperture with frictional forces retaining the installable unit in position within the aperture. In some embodiments, this friction fit between the installable units and the apertures results in compression of the sealing means 224 (e.g. as discussed above) to form the weatherproof seal.

Such a friction fit enables the installable unit to be secured within the aperture without requiring additional fasteners, bolts, or mechanical fixings, thereby simplifying installation and reducing the number of components required. The friction fit also enables the installable unit to be removed from the aperture without damage to the prefabricated wall panel 202, facilitating future reconfiguration of service penetrations as building requirements change over time.

In some embodiments, the cross-section of each aperture remains constant when moving in a direction between the first side 204 and the second side 206 of the prefabricated wall panel 202. In other words, the inner dimensions of the aperture do not vary along the depth of the aperture through the wall panel, and the inner surfaces of the aperture extend perpendicular to the surfaces of the first side 204 and the second side 206. This constant cross-section simplifies manufacture of the aperture and enables an installable unit to be inserted from either the first side 204 or the second side 206 of the prefabricated wall panel 202.

The installable units will typically be inserted from the first side 204 direction (external side) of the wall panel 202, enabling installation and removal to be performed from the outside the building, as this will usually be more accessible than the internal side (second side 206) within the building. However, in some applications, insertion from the second side 206 (internal side) may be preferable, for example when external access is restricted due to adjacent structures or the like.

To achieve the friction fit described above, in some embodiments the installable units may have a tapered shape, with a cross-section that increases slightly along the depth of the installable unit up to the size of the aperture cross-section. In such embodiments, the installable unit may have a leading end with a cross-section slightly smaller than the aperture cross-section, enabling the leading end to be easily positioned within the aperture during initial insertion. The cross-section of the installable unit then increases towards a trailing end, such that the trailing end has a cross-section that matches or is slightly larger than the aperture cross-section. As the installable unit is pushed further into the aperture, the increasing cross-section engages with the inner surfaces of the aperture to create the friction fit that retains the installable unit in position. This tapered configuration facilitates alignment and initial insertion of the installable unit whilst providing a secure friction fit when fully inserted.

As shown in FIGs. 2 and 4, when inserted, each installable unit is configured to be flush with the prefabricated wall panel 202. In other words, the outer face of the installable unit is substantially coplanar with the first side 204 of the prefabricated wall panel 202 when the installable unit is fully inserted into the aperture. This flush configuration provides a neat appearance and prevents water from pooling on protruding surfaces, which could otherwise lead to water ingress or degradation of the sealing means 224 over time.

In other embodiments, alternative mechanisms for inserting and retaining the installable units within the apertures may be employed. For example, a rail mechanism may be provided, wherein guide rails are positioned along the inner surfaces of the aperture and corresponding channels or grooves are formed on the outer surfaces of the installable unit. The installable unit can then be slid along the guide rails into position within the aperture. Such a rail mechanism may facilitate alignment during insertion and provide additional mechanical retention of the installable unit within the aperture.

Additionally or alternatively, fixing attachments such as screws, bolts, or latches may be provided to lock the installable units in place when inserted within the apertures. Such fixing attachments may be used in combination with or as an alternative to the friction fit described above, providing additional security against displacement of the installable unit. Other insertion and retention mechanisms may also be used depending on the specific requirements of the installation.

FIG. 3 illustrates shows the prefabricated wall panel system 200 with a plug-type installable unit 222 and a service-type installable unit 234 both separated from the prefabricated wall panel 202. In this view, the internal structure of the apertures and the components of the installable units are visible.

As seen in FIG. 3, each aperture 218,220 of the prefabricated wall panel 202 may include an aperture lining sleeve 226 covering the inner surface of that aperture. The aperture lining sleeve 226 lines the interior walls of the aperture, extending from the first side 204 to the second side 206 of the prefabricated wall panel 202. The aperture lining sleeve 226 protects the edges of the aperture and inner surface within the apertures, to provide a durable surface against which the installable units seat when inserted. Further, in some embodiments the aperture lining sleeve 226 forms a smooth surface against which the sealing means 224 can form the weatherproof seal. The aperture lining sleeve 226 is preferably formed from a non-combustible material, such as a metal material, e.g. powder-coated steel.

In embodiments where the sealing means 224 comprises a sealing member coupled to the prefabricated wall panel 202, the sealing member may be coupled to the aperture lining sleeve 226. For example, the first sealing member may be adhered or mechanically attached to an inner surface or an edge of the aperture lining sleeve 226, such that when an installable unit is inserted into the aperture, the first sealing member contacts the outer surface of the installable unit to form the weatherproof seal.

As further shown in FIG. 3, the plug-type installable unit 222 may include an outer sleeve 228 extending between the first end and the second end of the plug-type installable unit 222 and defining the outer surface of the plug-type installable unit 222. Similar to the aperture lining sleeve 226, the outer sleeve 228 may be formed from a non-combustible material such as a metal or powder-coated steel, and provides durability benefits for the plug-type installable unit 222 as well as providing a smooth surface for the sealing means 224 to seal against in some embodiments. In embodiments where the sealing means 224 comprises a sealing member coupled to the plug-type installable unit 222, the second sealing member may be coupled to the outer sleeve 228 of the plug-type installable unit 222.

The plug-type installable unit 222 further comprises a solid portion 230 contained within the outer sleeve 228. The solid portion 230 fills the interior of the outer sleeve 228 and to enable the plugging function when the plug-type installable unit 222 is inserted within an aperture. In some embodiments, the solid portion may have the same composition as the prefabricated wall panel 202. For example, in the embodiment of FIGs. 2 to 4 the solid portion 230 has a layered construction with an insulation layer disposed between two facing panel layers, to mirror the construction of the prefabricated wall panel 202. By mirroring the construction of the prefabricated wall panel 202, the solid portion 230 provides a consistent thermal and acoustic performance and a consistent fire rating across the wall surface.

In general, the solid portion 230 may have a fire rating equal to or greater than a fire rating of the prefabricated wall panel 202. This ensures that when the plug-type installable unit 222 is inserted within an aperture, the fire resistance of the prefabricated wall panel 202 is maintained across the entire wall surface without any reduction in fire performance at the aperture locations.

The plug-type installable unit 222 may further comprise one or more attachment points 232 coupled to the first end and/or the second end of the plug-type installable unit 222, that can be used both for pulling the plug-type installable unit 222 into position during installation and for extracting the plug-type installable unit 222 when removal is required. The attachment points 232 enable tools or lifting equipment to engage with the plug-type installable unit 222 to apply the pulling or pushing force required to insert the plug-type installable unit 222 into the aperture and form the friction fit, or to extract the plug-type installable unit 222 from the aperture when reconfiguration of the service penetrations is required. In the present embodiment, the attachment points 232 are fastening loops, specifically eye bolts, with four included on each side of the plug-type installable unit 222, however various types and configurations of attachments points can be used.

As also shown in FIG. 3, one of the plug-type installable units 222 of FIG. 2 has been replaced with a service-type installable unit 234. This would be done, for example, if a service penetration was required at the location of the aperture, e.g. during builder's work in connection (BWIC). The plug-type installable unit 222 could simply be removed from the aperture, for example via the attachment points 232, and the service-type installable unit 234 installed in its place in the aperture. In this way, a new service penetration can be included in the external wall of the building, without the need for drilling or cutting or the like, reducing the amount of on-site work.

The service-type installable unit 234 is configured to enable one or more services 238 to pass from the first side 204 of the prefabricated wall panel 202 to the second side 206 of the prefabricated wall panel 202 when inserted within an aperture. The one or more services 238 may include one or more pipes, one or more ducts, one or more wires, one or more cables, one or more conduits, one or more cable trays, or any combination thereof. The services 238 may supply or connect to various mechanical, electrical, plumbing and public health systems within the building, including but not limited to Heating, ventilation, and air conditioning (HVAC), lighting, power distribution, water supply, and drainage systems.

In embodiments where the prefabricated wall panel system 200 is used to form part of the external wall of a data centre, such as the modular data centre 100 of FIG. 1, the services 238 passing through the service-type installable unit 234 may include power distribution cables to connect the power supply modules 104 located externally to the data hall 102 to electrical distribution equipment within the data hall 102. Thus the services 238 may route electrical power from the power supply modules 104 through the external wall and into the data hall 102.

The service-type installable unit 234 may include an outer sleeve 236 extending between a first end and a second end of the service-type installable unit 234 and defining an outer surface of the service-type installable unit 234. The outer sleeve 236 may be similar to the outer sleeve of the plug-type installable units 222, increasing durability and sealing performance, and being formed from a non-combustible material such as a metal or powder-coated steel. In embodiments where the sealing means 224 comprises a sealing member coupled to the service-type installable unit 234, the sealing member may be coupled to the outer sleeve 236 of the service-type installable unit 234.

The service-type installable unit 234 further comprises a cavity contained within the outer sleeve 236. The cavity is configured to receive a filling material 240 and the one or more services 238 extending through the filling material 240. The services 238 pass through the cavity from the first end to the second end of the service-type installable unit 234, enabling the services 238 to extend from the exterior of the building (first side 204) to the interior of the building (second side 206) when the service-type installable unit 234 is inserted within an aperture of the prefabricated wall panel 202.

The filling material 240 is configured to surround the one or more services 238 within the cavity of the service-type installable unit 234. The filling material 240 occupies the spaces between and around the services 238, encapsulating the services 238 within the cavity to provide both structural support for the services 238 and weatherproof sealing performance for the service-type installable unit 234. The weatherproof seal provided by the filling material 240 works in conjunction with the sealing means 224 between the service-type installable unit 234 and the prefabricated wall panel 202 to maintain the overall weatherproof performance of the prefabricated wall panel system 200 when services 238 pass through the wall.

In use, the filling material 240 and the one or more services 238 fill the entire cavity within the outer sleeve 236 of the service-type installable unit 234. This complete filling of the cavity ensures that no voids or gaps remain within the service-type installable unit 234 that could compromise the sealing or fire protection performance.

In general, the filling material 240 may be any compound that provides external weatherproofing capabilities, and preferably fire stopping properties. In specific embodiments, the filling material 240 may be a putty material, a cellular rubber, silicone, mortar, or an insulating material. In a preferred embodiment, the filling material 240 is a fire-rated putty or mortar compound. Such materials are malleable during application, enabling the filling material 240 to be shaped and worked around the services 238 within the cavity. After application, the filling material 240 hardens to provide both weatherproofing and fire protection.

The filling material 240 may be chosen to have a fire rating equal to or greater than a fire rating of the prefabricated wall panel 202, such that the service-type installable unit 234 as a whole has a fire rating equal to or greater than a fire rating of the prefabricated wall panel 202. This ensures that the passage of services 238 through the prefabricated wall panel 202 does not create a weak point in the fire resistance of the wall. The fire-rated putty or mortar compound maintains the fire compartmentation of the building by preventing the spread of fire and smoke through the service penetration.

The service-type installable unit 234 may be prepared and installed according to different methods depending on the specific requirements of the installation. In one approach, the filling material 240 is applied on site around the services 238 after the services 238 have been routed through the cavity of the service-type installable unit 234. This on-site application of the filling material 240 enables the service-type installable unit 234 to accommodate the specific services 238 required for each installation, with the filling material 240 being hand-applied to conform to the particular arrangement and dimensions of the services 238 passing through the cavity.

The application of the filling material 240 and routing of the services 238 through the cavity may be performed either before or after the service-type installable unit 234 is inserted into the aperture of the prefabricated wall panel 202. In some embodiments, the services 238 are routed through the cavity and the filling material 240 is applied whilst the service-type installable unit 234 is separate from the prefabricated wall panel 202, enabling easier access to the cavity during preparation. The prepared service-type installable unit 234 is then inserted into the aperture with the services 238 already in place. In other embodiments, the service-type installable unit 234 is first inserted into the aperture, and the services 238 are subsequently routed through the cavity and the filling material 240 applied in situ. This latter approach may be advantageous when the services 238 are already partially installed within the building and need to be connected through the wall.

Alternatively, the service-type installable unit 234 may be pre-formed during manufacture with the filling material 240 within the cavity and short lengths of services passing through the filling material 240. In other words, the service-type installable unit 234 may be prepared off-site or in a controlled environment with stub lengths of the services 238 extending from both ends of the service-type installable unit 234. After the pre-formed service-type installable unit 234 has been inserted into the aperture of the prefabricated wall panel 202, the stub lengths of the services 238 are then connected to the corresponding services on site, both on the external side and the internal side of the building. This preformed approach enables quality-controlled preparation of the service-type installable unit 234 and reduces the amount of on-site work required to complete the service penetration.

As described above with reference to the plug-type installable unit 222, the service-type installable unit 234 may comprise one or more attachment points coupled to the first end and/or the second end of the service-type installable unit 234, such as hoops or eye bolts or the like. These attachment points enable tools or lifting equipment to engage with the service-type installable unit 234 during installation and removal from the aperture, e.g. via a friction fit as discussed above.

FIG. 4 illustrates an isometric view of the prefabricated wall panel system 200 of FIG. 3 with the installable units inserted into the prefabricated wall panel 202. In this assembled configuration, the first aperture 218 contains a service-type installable unit 234 with services 238 extending through filling material 240 between the sides of the prefabricated wall panel 202. The second aperture 220 contains a plug-type installable unit 222 with attachment points 232 visible on the outer face of the plug-type installable unit 222.

As discussed above, the interchangeability of the plug-type installable units 222 and the service-type installable units 234 enables the prefabricated wall panel system 200 to be readily reconfigured to accommodate changing service requirements. A plug-type installable unit 222 can be replaced by a service-type installable unit 234 when a service penetration is subsequently required at that location, or vice versa when a service penetration is no longer needed and the aperture is to be closed off. The plug-type installable unit 222 functions as a closing unit to occupy the aperture and seal it off when no services are required to pass through that location, maintaining the weatherproof and thermal performance of the prefabricated wall panel 202.

This interchangeability provides future-proofing for the building, as additional services can be added at a later date by removing a plug-type installable unit 222 from an aperture and installing a service-type installable unit 234 in its place. The building owner or operator is not constrained by the service penetration decisions made at the time of initial construction, and can adapt the building to accommodate new service requirements as they arise over the lifetime of the building (provided a prefabricated wall panel system 200 according to the present disclosure has been provided at that location).

In the configuration shown in FIG. 4, either or both of the installable units could be swapped to service-type installable units 234 depending on the building requirements. For example, if additional service penetrations were required, the plug-type installable unit 222 in the second aperture 220 could be removed and replaced with a further service-type installable unit 234, enabling services to pass through both apertures. Conversely, if the services 238 passing through the first aperture 218 were no longer required, the service-type installable unit 234 could be removed and replaced with a plug-type installable unit 222 to close off that aperture.

The prefabricated wall panel system 200 described herein may be provided as a kit of parts for a building. The kit of parts may comprise the prefabricated wall panel 202, one or more installable units of either or both types, and the sealing means 224. The kit of parts enables the prefabricated wall panel system 200 to be supplied with all components required for installation, with the installable units matched to the apertures of the prefabricated wall panel 202 as required for that building installation.

Although the prefabricated wall panel system 200 has been described herein primarily in the context of external walls of buildings, where weatherproof performance is of particular importance, the system may also be used for internal walls within a building. Internal walls may also benefit from the ability to readily add, remove, or reconfigure service penetrations without the need for drilling or cutting through the wall structure. In such internal wall applications, the sealing means 224 may provide benefits such as acoustic isolation, fire compartmentation, or dust sealing between adjacent spaces within the building, rather than or in addition to weatherproofing against external conditions.

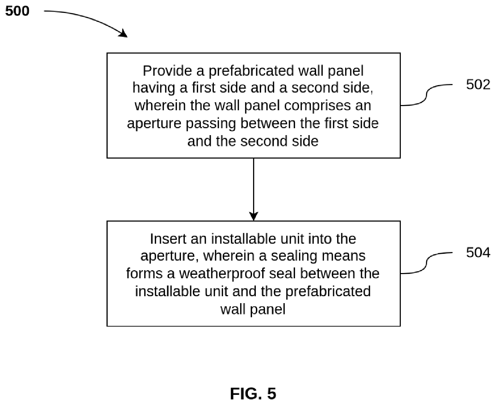

FIG. 5 illustrates a flowchart of a method 500 for configuring a prefabricated wall panel system, such as the prefabricated wall panel system 200 described above with reference to FIGs. 2 to 4.

The method 500 includes a step 502 of providing a prefabricated wall panel 202 having a first side 204 and a second side 206, wherein the prefabricated wall panel comprises an aperture passing through the prefabricated wall panel between the first side and the second side.

The method 500 proceeds to a step 504 of inserting, into the aperture, an installable unit 222,234 having a shape complementary to the aperture. When the installable unit 222,234 is inserted into the aperture, a sealing means 224 is positioned between the installable unit and the prefabricated wall panel to form a weatherproof seal between the prefabricated wall panel and the installable unit.

In some embodiments, inserting the installable unit into the aperture comprises applying a pulling or pushing force to the installable unit to form a friction fit between the aperture and the installable unit. The pulling or pushing force may be applied using tools or lifting equipment that engage with the attachment points 232 on the installable unit.

In some embodiments, the method 500 further comprises a step of, prior to inserting the installable unit, coupling a first sealing member to the prefabricated wall panel and/or coupling a second sealing member to the installable unit. As described above, the sealing means 224 may comprise a first sealing member coupled to the prefabricated wall panel 202 and/or a second sealing member coupled to the installable unit. The coupling of the sealing members may be performed during fabrication of the prefabricated wall panel 202 and/or the installable unit 222,234, or may be performed on site prior to insertion of the installable unit into the aperture.

In some embodiments, the installable unit is a service-type installable unit 234, and the method 500 may further comprise a step of, prior to inserting the service-type installable unit 234, removing from the aperture a plug-type installable unit 222. The plug-type installable unit 222 may be removed from the aperture by applying a pulling force to the attachment points 232 on the plug-type installable unit 222. After removal of the plug-type installable unit 222, the service-type installable unit 234 can be inserted into the aperture to enable services 238 to pass through the prefabricated wall panel 202.

In embodiments where the installable unit is a service-type installable unit 234, the method 500 may further comprise a step of inserting one or more services through a cavity contained within an outer sleeve of the installable unit, and disposing a filling material within the cavity around the one or more services within the cavity. As described above, the services 238 pass through the cavity of the service-type installable unit 234, and the filling material 240 is disposed within the cavity to surround the services 238.

The step of inserting the services 238 and disposing the filling material 240 may be performed before or after the service-type installable unit 234 is inserted into the aperture of the prefabricated wall panel 202. In some embodiments, the services 238 are routed through the cavity and the filling material 240 is applied whilst the service-type installable unit 234 is separate from the prefabricated wall panel 202, and the prepared service-type installable unit 234 is then inserted into the aperture. In other embodiments, the service-type installable unit 234 is first inserted into the aperture, and the services 238 are subsequently routed through the cavity and the filling material 240 applied in situ.

Although the prefabricated wall panel system 200 has been described herein primarily in the context of external walls of buildings, where weatherproof performance is of particular importance, the system may also be used for internal walls within a building. Internal walls may also benefit from the ability to readily add, remove, or reconfigure service penetrations without the need for drilling or cutting through the wall structure. In such internal wall applications, the sealing means 224 may provide benefits such as acoustic isolation, fire compartmentation, or dust sealing between adjacent spaces within the building, rather than or in addition to weatherproofing against external conditions.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

The following numbered clauses set out the scope of the present disclosure:
1. A prefabricated wall panel system for a building, the prefabricated wall panel system comprising: a prefabricated wall panel having a first side and a second side, wherein the prefabricated wall panel comprises an aperture passing through the prefabricated wall panel between the first side and the second side; an installable unit having a shape complementary to the aperture and configured to be removably inserted into the aperture; and a sealing means configured to be positioned between the installable unit and the prefabricated wall panel when the installable unit is inserted into the aperture to form a weatherproof seal between the prefabricated wall panel and the installable unit.
2. The prefabricated wall panel system of clause 1, wherein: the sealing means comprises a first sealing member coupled to the prefabricated wall panel and/or a second sealing member coupled to the installable unit.
3. The prefabricated wall panel system of clause 2, wherein the first sealing member extends around an edge or an inner surface of the aperture.
4. The prefabricated wall panel system of clauses 2 or 3, wherein the second sealing member extends around an edge or an outer surface of the installable unit.
5. The prefabricated wall panel system of any of clauses 2 to 4, wherein the first sealing member is a compressible gasket.
6. The prefabricated wall panel system of any of clauses 2 to 5, wherein the second sealing member is a compressible gasket.
7. The prefabricated wall panel system of any of clauses 2 to 6, wherein the first sealing member is made from a rubber or elastomer, preferably wherein the first sealing member is made from neoprene or ethylene propylene diene monomer, EPDM, rubber.
8. The prefabricated wall panel system of any of clauses 2 to 7, wherein the second sealing member is made from a rubber or elastomer, preferably wherein the second sealing member is made from neoprene or ethylene propylene diene monomer, EPDM, rubber.
9. The prefabricated wall panel system of any of clauses 2 to 6, wherein sealing means comprises both the first sealing member and the second sealing member, and the first sealing member is configured to contact the second sealing member when the installable unit is inserted into the aperture to form the weatherproof seal.
10. The prefabricated wall panel system of any preceding clause, wherein the weatherproof seal is a watertight seal and/or an airtight seal.
11. The prefabricated wall panel system of any preceding clause, wherein a cross-section of the aperture remains constant when moving in a direction between the first surface and the second surface.
12. The prefabricated wall panel system of any preceding clause, wherein the aperture has a rectangular cross-section.
13. The prefabricated wall panel system of clause 12, wherein a longer side of the rectangular cross-section extends parallel to a base of the prefabricated wall panel.
14. The prefabricated wall panel system of any preceding clause, wherein the prefabricated wall panel has a base and a top edge, and wherein either: the aperture is located closer to the top edge than the base; the aperture is located at a midpoint between the top edge and the base; or the aperture is located closer to the base than the top edge.
15. The prefabricated wall panel system of any preceding clause, wherein the aperture is pre-formed during fabrication of the prefabricated wall panel.
16. The prefabricated wall panel system of any preceding clause, wherein the prefabricated wall panel further comprises a lining sleeve covering an inner surface of the aperture.
17. The prefabricated wall panel system of clause 16 when dependent on clause 2, wherein the first sealing member is coupled to the lining sleeve.
18. The prefabricated wall panel system of clauses 16 or 17, wherein the sleeve is formed from a non-combustible material, preferably wherein the sleeve is formed from a metal material.
19. The prefabricated wall panel system of any preceding clause, wherein: the aperture is a first aperture; and the prefabricated wall panel further comprises a second aperture passing through the prefabricated wall panel between the first side and the second side.
20. The prefabricated wall panel system of clause 19, wherein the first aperture and the second aperture are positioned symmetrically around a centre line of the first and second sides.
21. The prefabricated wall panel system of clauses 19 or 20, wherein the first aperture and the second aperture have identical cross-sections.
22. The prefabricated wall panel system of any of clauses 19 to 21, further comprising: a second installable unit having a shape complementary to the second aperture and configured to be removably inserted into the second aperture; and a second sealing means configured to be positioned between the second installable unit and the prefabricated wall panel when the second installable unit is inserted into the second aperture to form a weatherproof seal between the prefabricated wall panel and the second installable unit.
23. The prefabricated wall panel system of any preceding clause, wherein the prefabricated wall panel comprises a plurality of layers including a first facing panel forming the first side, a second facing panel forming the second side, and preferably including a first insulation layer disposed between the first facing panel and the second facing panel.
24. The prefabricated wall panel system of any preceding clause, wherein the installable unit is a first type of installable unit configured to plug the aperture when inserted within the aperture.
25. The prefabricated wall panel system of clause 24, wherein the installable unit comprises: an outer sleeve extending between a first end and a second end of the installable unit and defining an outer surface of the installable unit; and a solid portion contained within the outer sleeve.
26. The prefabricated wall panel system of clause 25, wherein the solid portion comprises a plurality of layers including a third facing panel, a fourth facing panel, and preferably including a second insulation layer disposed between the third facing panel and the fourth facing panel.
27. The prefabricated wall panel system of clauses 25 or 26, wherein the solid portion has a fire rating equal to or greater than a fire rating of the prefabricated wall panel.
28. The prefabricated wall panel system of any of clauses 25 to 27, wherein the installable unit comprises one or more attachment points coupled to the first end and/or the second end of the installable unit.
29. The prefabricated wall panel system of any of clauses 1 to 23, wherein the installable unit is a second type of installable unit configured to enable one or more services to pass from the first side of the prefabricated wall panel to the second side of the prefabricated wall panel when inserted within the aperture.
30. The prefabricated wall panel system of clause 29, wherein the one or more services include: one or more pipes, one or more ducts, one or more wires, one or more cables, one or more conduits, one or more cable trays, or any combination thereof.
31. The prefabricated wall panel system of clauses 29 or 30, wherein the installable unit comprises: an outer sleeve extending between a first end and a second end of the installable unit and defining an outer surface of the installable unit; and a cavity contained within the outer sleeve, said cavity configured to receive a filling material and the one or more services extending through the filling material.
32. The prefabricated wall panel system of clause 31, wherein the filling material is configured to surround the one or more services within the cavity.
33. The prefabricated wall panel system of clauses 31 or 32, wherein the filling material includes one or more of: a putty material; a cellular rubber; silicone; mortar; and/or an insulating material.
34. The prefabricated wall panel system of any of clauses 31 to 33, wherein in use the filling material and the one or more services fill the entire cavity within the outer sleeve.
35. The prefabricated wall panel system of any of clauses 31 to 34, wherein the filling material is configured to form a weatherproof seal within the cavity.
36. The prefabricated wall panel system of any of clauses 31 to 35, wherein the filling material has a fire rating equal to or greater than a fire rating of the prefabricated wall panel.
37. The prefabricated wall panel system of any of clauses 31 to 36, wherein the installable unit comprises one or more attachment points coupled to the first end and/or the second end of the installable unit.
38. The prefabricated wall panel system of any of clauses 22 to 25 when dependent on clause 2 or any of clauses 28 to 32 when dependent on clause 2, wherein the second sealing member is coupled to the outer sleeve.
39. The prefabricated wall panel system of any of clauses 25 to 28 or any of clauses 31 to 38, wherein the outer sleeve is formed from a non-combustible material, preferably wherein the sleeve is formed from a metal material.
40. The prefabricated wall panel system of any preceding clause, wherein the installable unit has a rectangular cross-section.
41. The prefabricated wall panel system of any preceding clause, wherein the installable unit is configured to be held within the aperture via a friction fit.
42. The prefabricated wall panel system of any preceding clause, wherein the installable unit has a fire rating equal to or greater than a fire rating of the prefabricated wall panel.
43. The prefabricated wall panel system of any preceding clause, wherein: the first side of the prefabricated wall panel is configured form part of an external wall of the building when installed in the building, and the second side of the prefabricated wall panel is configured to form part of an internal wall of the building when installed in the building.
44. The prefabricated wall panel system of any preceding clause, wherein the installable unit is configured to be removably inserted into the aperture from direction of the first side of the prefabricated wall panel.
45. The prefabricated wall panel system of any preceding clause, wherein the installable unit is configured to be flush with the prefabricated wall panel when the installable unit is inserted into the aperture.
46. A prefabricated wall panel for prefabricated wall panel system, the prefabricated wall panel having a first side and a second side, and the prefabricated wall panel comprising: an aperture passing through the prefabricated wall panel between the first side and the second side, said aperture configured to receive an installable unit having a shape complementary to the aperture and being configured to be removably inserted into the aperture; and a sealing means configured to be positioned between the prefabricated wall panel and the installable unit when the installable unit is inserted into the aperture to form a weatherproof seal between the prefabricated wall panel and the installable unit.
47. An installable unit for a prefabricated wall panel system for a building, said prefabricated wall panel system including a prefabricated wall panel having a first side and a second side, and an aperture passing through the prefabricated wall panel between the first side and the second side, wherein: the installable unit has a shape complementary to the aperture and is configured to be removably inserted into the aperture; and the installable unit comprises a sealing means configured to be positioned between the installable unit and the prefabricated wall panel when the installable unit is inserted into the aperture to form a weatherproof seal between the prefabricated wall panel and the installable unit.
48. A building having at least one wall comprising the prefabricated wall panel system of any of clauses 1 to 45.
49. The building of clause 48, wherein the building is a data centre.
50. A kit of parts for prefabricated wall panel system for a building, the kit of parts comprising: a prefabricated wall panel having a first side and a second side, wherein the prefabricated wall panel comprises an aperture passing through the prefabricated wall panel between the first side and the second side; an installable unit having a shape complementary to the aperture and configured to be removably inserted into the aperture; and a sealing means configured to be positioned between the installable unit and the prefabricated wall panel when the installable unit is inserted into the aperture to form a weatherproof seal between the prefabricated wall panel and the installable unit.
51. A method of configuring a prefabricated wall panel system comprising: providing a prefabricated wall panel having a first side and a second side, wherein the prefabricated wall panel comprises an aperture passing through the prefabricated wall panel between the first side and the second side; inserting, into the aperture, an installable unit having a shape complementary to the aperture, wherein a sealing means is positioned between the installable unit and the prefabricated wall panel when the installable unit is inserted into the aperture to form a weatherproof seal between the prefabricated wall panel and the installable unit.
52. The method of configuring a prefabricated wall panel system of clause 51, wherein inserting the installable unit into the aperture comprises: applying a pulling or pushing force to the installable unit to form a friction fit between the aperture and the installable unit.
53. The method of configuring a prefabricated wall panel system of clauses 51 or 52, the method further comprising the step of: prior to inserting the installable unit, coupling a first sealing member to the prefabricated wall panel and/or coupling a second sealing member to the installable unit.
54. The method of configuring a prefabricated wall panel system of any of clauses 51 to 53, wherein the installable unit is an installable unit of a second type that is configured to enable one or more services to pass from the first side of the prefabricated wall panel to the second side of the prefabricated wall panel when inserted within the aperture, the method further comprising the step of: prior to inserting the installable unit of the second type, removing from the aperture an installable unit of a first type that is configured to plug the aperture when inserted within the aperture.
55. The method of configuring a prefabricated wall panel system of any of clauses 51 to 54, wherein the installable unit is an installable unit of a second type that is configured to enable one or more services to pass from the first side of the prefabricated wall panel to the second side of the prefabricated wall panel when inserted within the aperture, the method further comprising the step of: inserting one or more services through a cavity contained within an outer sleeve of the installable unit; and disposing a filling material within the cavity around the one or more services within the cavity.

## Claims

1. A prefabricated wall panel system for a building, the prefabricated wall panel system comprising:
a prefabricated wall panel having a first side and a second side, wherein the prefabricated wall panel comprises an aperture passing through the prefabricated wall panel between the first side and the second side;
an installable unit having a shape complementary to the aperture and configured to be removably inserted into the aperture; and
a sealing means configured to be positioned between the installable unit and the prefabricated wall panel when the installable unit is inserted into the aperture to form a weatherproof seal between the prefabricated wall panel and the installable unit.

2. The prefabricated wall panel system of claim 1, wherein:
the sealing means comprises a first sealing member coupled to the prefabricated wall panel and extending around an edge or an inner surface of the aperture; and/or
a second sealing member coupled to the installable unit and extending around an edge or an outer surface of the installable unit.

3. The prefabricated wall panel system of claim 2, wherein sealing means comprises both the first sealing member and the second sealing member, and the first sealing member is configured to contact the second sealing member when the installable unit is inserted into the aperture to form the weatherproof seal.

4. The prefabricated wall panel system of any preceding claim, wherein a cross-section of the aperture remains constant when moving in a direction between the first surface and the second surface.

5. The prefabricated wall panel system of any preceding claim, wherein:
the aperture has a rectangular cross-section;
preferably wherein a longer side of the rectangular cross-section extends parallel to a base of the prefabricated wall panel.

6. The prefabricated wall panel system of any preceding claim, wherein the prefabricated wall panel further comprises a lining sleeve covering an inner surface of the aperture.

7. The prefabricated wall panel system of any preceding claim, wherein:
the aperture is a first aperture; and
the prefabricated wall panel further comprises a second aperture passing through the prefabricated wall panel between the first side and the second side;
preferably wherein the first aperture and the second aperture have identical cross-sections.

8. The prefabricated wall panel system of any preceding claim, wherein the installable unit is a first type of installable unit configured to plug the aperture when inserted within the aperture;
preferably wherein the installable unit comprises:
an outer sleeve extending between a first end and a second end of the installable unit and defining an outer surface of the installable unit; and
a solid portion contained within the outer sleeve.

9. The prefabricated wall panel system of any of claims 1 to 7, wherein:
the installable unit is a second type of installable unit configured to enable one or more services to pass from the first side of the prefabricated wall panel to the second side of the prefabricated wall panel when inserted within the aperture
preferably wherein the installable unit comprises:
an outer sleeve extending between a first end and a second end of the installable unit and defining an outer surface of the installable unit; and
a cavity contained within the outer sleeve, said cavity configured to receive a filling material and the one or more services extending through the filling material.

10. The prefabricated wall panel system of any preceding claim, wherein the installable unit comprises one or more attachment points coupled to a first end and/or a second end of the installable unit.

11. The prefabricated wall panel system of any preceding claim, wherein the installable unit is configured to be held within the aperture via a friction fit.

12. A prefabricated wall panel for prefabricated wall panel system, the prefabricated wall panel having a first side and a second side, and the prefabricated wall panel comprising:
an aperture passing through the prefabricated wall panel between the first side and the second side, said aperture configured to receive an installable unit having a shape complementary to the aperture and being configured to be removably inserted into the aperture; and
a sealing means configured to be positioned between the prefabricated wall panel and the installable unit when the installable unit is inserted into the aperture to form a weatherproof seal between the prefabricated wall panel and the installable unit.

13. An installable unit for a prefabricated wall panel system for a building, said prefabricated wall panel system including a prefabricated wall panel having a first side and a second side, and an aperture passing through the prefabricated wall panel between the first side and the second side, wherein:
the installable unit has a shape complementary to the aperture and is configured to be removably inserted into the aperture; and
the installable unit comprises a sealing means configured to be positioned between the installable unit and the prefabricated wall panel when the installable unit is inserted into the aperture to form a weatherproof seal between the prefabricated wall panel and the installable unit.

14. A building having at least one wall comprising the prefabricated wall panel system of any of claims 1 to 11, preferably wherein the building is a data centre.

15. A method of configuring a prefabricated wall panel system comprising:
providing a prefabricated wall panel having a first side and a second side, wherein the prefabricated wall panel comprises an aperture passing through the prefabricated wall panel between the first side and the second side;
inserting, into the aperture, an installable unit having a shape complementary to the aperture, wherein a sealing means is positioned between the installable unit and the prefabricated wall panel when the installable unit is inserted into the aperture to form a weatherproof seal between the prefabricated wall panel and the installable unit.
